Europäisches Patentamt

European Patent Office

Office européen des brevets

(11) Veröffentlichungsnummer : **0 100 496**
**B1**

(12) # EUROPÄISCHE PATENTSCHRIFT

(45) Veröffentlichungstag der Patentschrift :
28.03.90

(51) Int. Cl.⁵ : **G 02 B 6/38**

(21) Anmeldenummer : 83107201.2

(22) Anmeldetag : 22.07.83

(54) Steckerkupplung.

(30) Priorität : 03.08.82 DE 3228921

(43) Veröffentlichungstag der Anmeldung :
15.02.84 Patentblatt 84/07

(45) Bekanntmachung des Hinweises auf die Patenterteilung : 28.03.90 Patentblatt 90/13

(84) Benannte Vertragsstaaten :
FR GB IT NL

(56) Entgegenhaltungen :
EP--A-- 0 030 591
DE--A-- 2 415 855
US--A-- 2 385 893

(73) Patentinhaber : **Philips Kommunikations Industrie AG**
**Thurn-und-Taxis-Strasse 10**
**D-8500 Nürnberg 10 (DE)**

(72) Erfinder : **Schmidt, Bernhard**
**Rehfeld 8**
**D-5206 Neunkirchen 1 (DE)**

(74) Vertreter : **Koch, Ingo, Dr.-Ing. et al**
**Philips Patentverwaltung GmbH Wendenstrasse 35**
**Postfach 10 51 49**
**D-2000 Hamburg 1 (DE)**

## Beschreibung

Die Erfindung bezieht sich auf eine Steckerkupplung mit Schraubkappe, insbesondere für Lichtleitfaser-Stecker, mit einem Kupplungskörper, der eine Axialbohrung als Steckeraufnahme und zumindest einendig ein Außengewinde für eine den Stecker in der Axialbohrung halternde Schraubkappe mit einer Durchgangsbohrung im Kappenboden besitzt, und mit zusammenwirkenden Anschlägen, von denen einer am Kupplungskörper radial abstehend und einer an der Schraubkappe an einem stegförmigen Wandungsfortsatz axial überstehend angeordnet ist.

Eine Steckerkupplung der gattungsgemäßen Art mit einer Verliersicherung für die Schraubkappe ist in der DE-OS 29 50 853 gezeigt. Die hier als Verliersicherung für die Schraubkappe vorgesehenen Anschläge bestehen zum einen aus einem an der Schraubkappe angeformten, ihr freies Ende axial überragenden, stegförmigen Wandungsfortsatz, und aus aus dem Kupplungskörper radial herausragende Stifte, die in hierfür vorgesehene Radialbohrungen eingesetzt sind. Bei der bekannten Steckerkupplung läßt sich die verliersichere Anordnung der Schraubkappe auf dem Außengewinde des Kupplungskörpers erst nach erfolgter Steckermontage realisieren. In der Praxis sieht das so aus, daß die Schraubkappe zunächst lose auf das Gewinde des Kupplungskörpers aufgeschraubt, dann der Stecker durch die im Kappenboden befindliche Öffnung hindurch in die Axialbohrung des Kupplungskörpers gesteckt und hiernach der Stecker durch Anziehen der Schraubkappe, die auf in der Axialbohrung angeordnete Spannelemente wirkt, festgelegt wird. Danach werden in den Kupplungskörper Löcher gebohrt und darin die als Anschläge dienenden Stifte eingesetzt. Ein vorheriges Einbringen der Stifte ist wegen der unterschiedlichen, auf Toleranzabweichungen zurückzuführenden Aufschraubweiten der Schraubkappen nicht durchführbar, zumindest aber nicht zu empfehlen. Bei der bekannten Steckerkupplung ist die Herstellung der Verliersicherung für die Schraubkappe recht langwierig, arbeitsintensiv und teuer.

Ausgehend von einer Steckerkupplung der eingangs genannten Art liegt der Erfindung die Aufgabe zugrunde, eine Verliersicherung für die Schraubkappe zu schaffen, die aus zusammenwirkenden Anschlägen besteht, deren Anbringung schnell und einfach, insbesondere auch kostengünstig und ohne mechanische Bearbeitung erfolgen kann.

Zur Lösung dieser Aufgabe ist erfindungsgemäß vorgesehen, daß der Anschlag des Kupplungskörpers ein radial nach außen abstehender Nocken eines auf dem Kupplungskörper gehaltenen Ringes ist.

Diese erfindungsgemäße Maßnahme erbringt gegenüber dem vorgegebenen Stand der Technik wesentliche Vorteile. So ergibt sich eine erhebliche Kostensenkung durch die nun wesentlich vereinfachte Montage, die sich im Aufschieben des Ringes erschöpft und keiner spangebenden Bearbeitung des Kupplungskörpers bedarf. Ein weiterer besonderer Vorteil der Erfindung ergibt sich dadurch, daß der Ring unabhängig vom Stecker montiert und schon vor der Steckermontage auf dem Kupplungskörper angeordnet werden kann, so daß die Schraubkappe schon auf dem Vertriebsweg der Steckerkupplung verliersicher an dieser festgelegt ist. Die Vormontage des Ringes ist möglich, weil dieser vorzugsweise klemmend, d. h. mit Preßsitz auf dem Kupplungskörper angeordnet ist, und daher anders als es bei starren Stiften der Fall ist, im Bedarfsfall noch verdreht werden kann.

Weiterhin kann es auch von Vorteil sein, wenn der an der Schraubkappe angeordnete Anschlag Teil eines separat gefertigten Elementes, insbesondere aus Kunststoff, ist, welches aus einer auf die Schraubkappe aufgesteckten und auf dieser befestigten Kappe besteht, die hinterendig einen zentrisch gelochten Kappenboden und vorderendig einen, den Ring axial übergreifenden, stegförmigen Wandungsfortsatz als Anschlag aufweist. Wenn man davon ausgeht, daß es sich bei einer Schraubkappe für eine Steckerkupplung der erfindungsgemäßen Art im allgemeinen um ein Metall-Formdrehteil handelt, so leuchtet es ohne weiteres ein, daß dieses Formdrehteil wesentlich einfacher herzustellen und spangebend zu bearbeiten ist, wenn auf die einstückige Anordnung der exzentrischen Anschlagnase an der Anschraubkappe verzichtet werden kann. Diesem Umstand trägt die Erfindung durch die aufzusteckende Kunststoffkappe, die ihrerseits den Anschlagnocken aufweist, Rechnung. Insbesondere ist es erfindungsgemäß vorteilhaft, wenn eine Kombination aus aufsteckbarem Ring und aufsteckbarer Kappe verwendet wird.

Vorteilhafte Ausgestaltungen und Weiterbildungen der Erfindung sind in den Unteransprüchen gekennzeichnet.

Ein Ausführungsbeispiel der Erfindung wird nachfolgend anhand der Zeichnung näher erläutert.

Es zeigen :

Fig. 1 eine Explosivdarstellung der Steckerkupplung,

Fig. 2 im gegenüber Fig. 1 vergrößerten Maßstab die zusammengesetzte Steckerkupplung bereichsweise im Schnitt.

Die neue Steckerkupplung besteht aus einem Kupplungskörper 1, der eine übliche und daher im einzelnen nicht dargestellte Axialbohrung zur Aufnahme eines ebenfalls nicht dargestellten Lichtleitfaser-Steckers aufweist. Im dargestellten Ausführungsbeispiel weist der Kupplungskörper 1 an seinen beiden Endbereichen ein Außengewinde 2 zur schraubgemäßen Aufnahme einer mit einem entsprechenden Innengewinde 3 versenen Schraubkappe 4 auf. Die Schraubkappe 4 besitzt einen Boden 5 mit einer zentrischen Bohrung 6, durch die hindurch der Stecker in die Axialbohrung im Kupplungskörper 1 hineingesteckt werden kann. Der Boden 5 der Schraubkappe 4 wirkt beim Aufschrauben derselben auf das Außengewinde 2 gegen ein Druckstück 7, welches mit innerhalb des Kupplungskörpers 1 angeordneten Spannelementen, die zum Festlegen des Steckers vorgesehen sind, zusammenarbeitet. Wird also die Schraubkappe 4 durch Drehen gegen das Druckstück 7 bewegt, wird ein in dem Kupplungskörper 1 sitzender Stecker verspannt, und bei einer entgegengesetzten Drehbewegung wieder gelöst. Für das Verspannen und Lösen eines Steckers reicht im allgemeinen etwa eine halbe Umdrehung der Schraubkappe 4, was durch eine entsprechende Gewindesteigung ohne weiteres realisierbar ist.

Da demnach für eine Steckermontage und -demontage ein völliges Abschrauben der Schraubkappe 4 nicht erforderlich ist, nutzt die Erfindung diesen Umstand dazu, die Schraubkappe 4 mit einfachen Mitteln gegen Verlieren zu sichern, und zwar in einer Art und Weise, die eine begrenzte Verstellung (Schraubbewegung) der Schraubkappe 4 zuläßt, welche für die Steckermontage und -demontage ausreicht.

Als Verliersicherung für die Schraubkappe 4 dient zunächst ein Element, vorzugsweise aus Kunststoff, welches aus einem Ring 8 mit einem radial nach außen abstehenden Nocken 9 als Anschlag ausgebildet ist. Der Ring 8 besitzt eine Ringöffnung, mit der er relativ stramm sitzend auf den sich an das Außengewinde 2 des Kupplungskörpers 1 anschließenden zylindrischen Ansatz 10 paßt. Der Ring 8 stützt sich endseitig gegen eine Ringschulter 11 des Kupplungskörpers 1 ab. Wie die Zeichnung weiterhin zeigt, besitzt der Nocken 9 zwei Anschlagflächen 12, 13, die sich parallel zueinander in Achsrichtung des Rings 8 erstrecken, und eine Länge, die etwa der Breite des Rings 8 entspricht. Es ist möglich, daß der Ring 8 aus dem Abschnitt eines Strangpreßprofils besteht, ebenfalls kann der Ring 8 z. B. durch Spritzgießen hergestellt werden.

Mit dem als Anschlag dienenden Nocken 9 des Rings 8 wirkt ein Gegenanschlag zusammen, der die Wandung der Schraubkappe 4 stegförmig überragt. Der Gegenanschlag kann einstückig mit der Schraubkappe ausgebildet sein, wie dies in der DE-OS 29 50 853 gezeigt ist. Erfindungsgemäß ist jedoch vorzugsweise vorgesehen, daß der an der Schraubkappe 4 angeordnete Gegenanschlag Teil eines separat gefertigten Elements, vorzugsweise aus Kunststoff, ist, das aus einer Kappe 14 besteht, die hinterendig einen eine zentrische Lochung 15 aufweisenden Kappenboden 16 und vorderendig einen stegförmigen Wandungsfortsatz 17 als Anschlag aufweist. Der Wandungsfortsatz 17 kann etwa viertelkreisbogenförmig ausgebildet sein.

Die Kappe 14 kann kraftschlüssig und/oder formschlüssig und/oder durch Kleben an der Schraubkappe 4, auf die sie lediglich aufgesteckt wird, festgelegt sein.

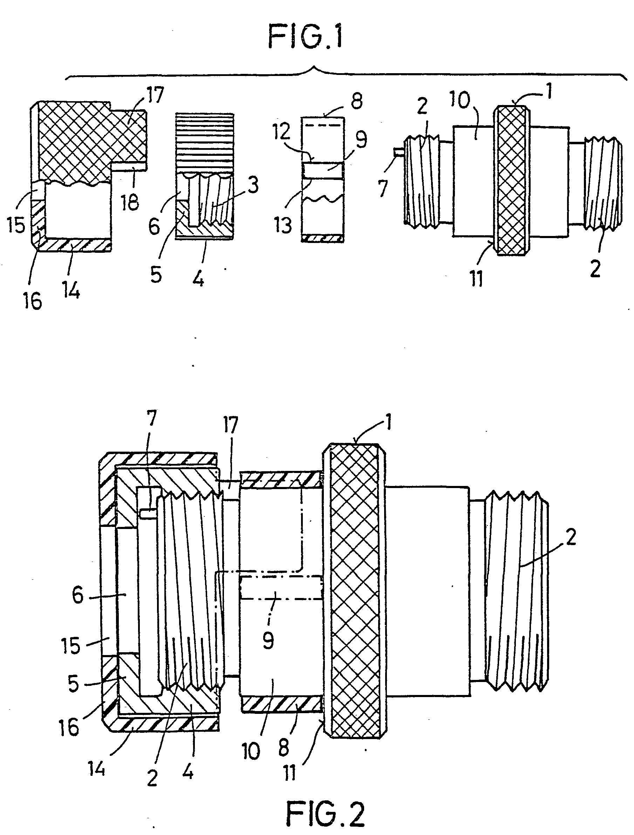

Geht man von Fig. 1 aus, so kann für den Zusammenbau der Steckerkupplung vorgesehen werden, daß man zunächst den Ring 8 auf den Ansatz 10 des Kupplungskörpers 1 aufschiebt, hiernach die Schraubkappe 4 auf das Innengewinde 2 bis zum Festsitz, d. h. bis ein eingesteckter Stecker im Kupplungskörper fixiert ist, aufschraubt, und schließlich die Kappe 14 auf die Schraubkappe 4 aufsteckt. Sieht man dabei noch vor, daß die Anschlagfläche 18 des Wandungsfortsatzes 17 an der Anschlagfläche 12 des Nockens 9 anliegt, so steht für eine auf Lösen gerichtete Schraubbewegung der Schraubkappe 4 mehr als eine halbe Umdrehung zur Verfügung, was völlig ausreichend ist.

Es ist auch möglich, die Kappe 14 axial und radial gesichert z. B. durch Verkleben mit der Schraubkappe 4 nach deren Aufschrauben auf das Außengewinde 2 zu verbinden. Durch den strammen (Preß-) Sitz des Rings 8 auf dem Ansatz 10 soll nämlich nur eine Verdrehsicherung gegen ein ungewolltes Verdrehen der Schraubkappe 4 erreicht werden, was aber nicht ausschließt, daß der Ring 8 verdreht werden kann, wenn auf die Schraubkappe 4 und/oder auf die Kappe 14 ein entsprechend großes Drehmoment ausgeübt wird. Auf diese Weise ist es immer möglich, die Schraubkappe 4 so fest anzuziehen, wie es für ein ausreichendes Verspannen eines im Kupplungskörper 1 sitzenden Steckers erforderlich ist.

Das Anziehen und Lösen der fest mit der Schraubkappe 4 verbundenen Kappe 14 wird dadurch erleichtert, daß die Kappe 14 außenseitig gerändelt ausgeführt ist.

## Patentansprüche

1. Steckerkupplung mit Schraubkappe, insbesondere für Lichtleitfaser-Stecker, mit einem Kupplungskörper (1), der eine Axialbohrung als Steckeraufnahme und zumindest einendig ein Außengewinde (2) für eine den Stecker in der Axialbohrung halternde Schraubkappe (4) mit einer Durchgangsbohrung (6) im Kappenboden (5) besitzt, und mit zusammenwirkenden Anschlägen (12, 18), von denen einer am Kupplungskörper (1) radial abstehend und einer an der Schraubkappe an einem stegförmigen Wandungsfortsatz (17) axial überstehend angeordnet ist, dadurch gekennzeichnet, daß der Anschlag des Kupplungskörpers (1) ein radial nach außen abstehender Nocken (9) eines auf dem Kupplungskörper (1) gehaltenen Ringes (8) ist.

2. Steckerkupplung nach Anspruch 1, dadurch gekennzeichnet, daß der Wandungsfortsatz (17) der Schraubkappe (4) Bestandteil einer auf der Schraubkappe (4) gehaltenen Kappe (14) ist, die hinterendig einen zentrisch gelochten Kappenboden (16) aufweist und daß der vorderendig angebrachte Wandungsfortsatz (17) den Ring (8) axial übergreift.

3. Steckerkupplung nach Anspruch 1 oder 2, dadurch gekennzeichnet, daß der Ring (8) mit Klemmung drehbar auf dem Kupplungskörper (1) gehalten ist.

4. Steckerkupplung nach Anspruch 2 oder 3, dadurch gekennzeichnet, daß sowohl der Ring (8) als auch die Kappe (14) als einstückiges Kunststoffteil ausgebildet sind.

5. Steckerkupplung nach einem oder mehreren der Ansprüche 1 bis 4, dadurch gekennzeichnet, daß der Ring (8) aus dem Abschnitt eines rohrförmigen Strangpreßprofils besteht.

6. Steckerkupplung nach einem oder mehreren der Ansprüche 1 bis 5, dadurch gekennzeichnet, daß der Ring (8) gegen eine am Kupplungskörper (1) vorgesehene Ringschulter (11) abgestützt ist.

7. Steckerkupplung nach einem oder mehreren der Ansprüche 1 bis 6, dadurch gekennzeichnet, daß der Nocken (9) zwei Parallel zueinander verlaufende, und sich über die Länge des Rings (8) axial erstreckende Anschlagflächen (12, 13) aufweist.

8. Steckerkupplung nach einem oder mehreren der Ansprüche 1 bis 7, dadurch gekennzeichnet, daß der stegförmige Wandungsfortsatz (17) der Kappe (14) einen etwa viertelkreisringförmigen Querschnitt und eine Länge aufweist, die der des Rings (8) angepaßt ist.

9. Steckerkupplung nach einem oder mehreren der Ansprüche 1 bis 8, dadurch gekennzeichnet, daß die Kappe (14) außenseitig gerändelt ist.

## Claims

1. A plug coupling with screw cap, in particular for optical fibre plugs, comprising a coupling member (1) which has an axial aperture as a plug receiver and at least at one end an external screwthread (2) for a screw cap (4) which fixes the plug in the axial aperture and has a passage (6) in the bottom (5) of the cap and is connected with cooperating abutments (12, 18), one of which at the coupling member (1) is connected so as to project radially and one of which at the screw cap is connected to a stud-like wall extension (17) so as to protrude axially, characterized in that the abutment of the coupling member (1) is a radially outwardly projecting cam (9) of a ring (8) held on the coupling member (1).

2. A plug coupling as claimed in Claim 1, characterized in that the wall extension (17) of the screw cap (4) forms part of a cap (14) held on the screw cap (4) which at its rear end comprises a centrally apertured cap bottom (16) and that the wall extension (17) provided at the front end axially overlaps the ring (8).

3. A plug coupling as claimed in Claim 1 or 2, characterized in that the ring (8) is held on the coupling member (1) with clamping so as to be rotatable.

4. A plug coupling as claimed in Claim 2 or 3, characterized in that both the ring (8) and the cap (14) are formed as one integral synthetic resin part.

5. A plug coupling as claimed in one or more of the Claims 1 to 4, characterized in that the ring (8) consists of the section of a tubular extruded profiled member.

6. A plug coupling as claimed in one or more of the Claims 1 to 5, characterized in that the ring (8) bears against an annular shoulder (11) provided on the coupling member (1).

7. A plug coupling as claimed in one or more of the Claims 1 to 6, characterized in that the cam (9) comprises two abutting faces (12, 13) extending axially over the length of the ring (8) and parallel to each other.

8. A plug coupling as claimed in one or more of the Claims 1 to 7, characterized in that the stud-like wall extension (17) of the cap (14) has a cross-section in the form of a quarter of an arc of a circle and a length which is adapted to that of the ring (8).

9. A plug coupling as claimed in one or more of the Claims 1 to 8, characterized in that the cap (14) is milled on its outside.

## Revendications

1. Coupleur de prises muni d'un bouchon fileté, notamment pour des prises de fibres optiques, comprenant un corps de couplage (1) qui présente une perforation axiale pour la réception de la prise et dont au moins une extrémité présente un filetage extérieur (2) pour un bouchon fileté (4) maintenant la prise dans la perforation axiale et présentant une perforation de passage (6) réalisée dans le fond du bouchon (5), et de butées coopérantes (12, 18) dont l'une s'étend radialement à partir du corps de couplage (1) et dont une autre est disposée au bouchon fileté de façon à dépasser axialement d'un prolongement de paroi en forme de nervure (17), caractérisé en ce que la butée du corps de couplage (1) est une came (9) s'étendant radialement vers l'extérieur d'un anneau (8) maintenu sur le corps de couplage (1).

2. Coupleur de prises selon la revendication 1, caractérisé en ce que le prolongement de paroi (17) du bouchon fileté (4) est solidaire d'un capuchon (14) maintenu sur le bouchon fileté (4), capuchon dont l'extrémité arrière présente un fond de capuchon (16) muni d'une perforation centrique, alors que le prolongement de paroi (17) disposé à l'extrémité avant dépasse axialement de l'anneau (8).

3. Coupleur de prises selon la revendication 1 ou 2, caractérisé en ce que l'anneau (8) est maintenu avec serrage mais de façon à pouvoir tourner sur le corps de couplage (1).

4. Coupleur de prises selon la revendication 2 ou 3, caractérisé en ce que tant l'anneau (8) que le capuchon (14) sont réalisés comme une seule pièce en matière synthétique.

5. Coupleur de prises selon l'une ou plusieurs des revendications 1 à 4, caractérisé en ce que l'anneau (8) est constitué par un segment d'un profil extrudé tubulaire.

6. Coupleur de prises selon l'une ou plusieurs des revendications 1 à 5, caractérisé en ce que l'anneau (8) repose contre un épaulement annulaire (11) disposé sur le corps de couplage (1).

7. Coupleur de prises selon l'une ou plusieurs des revendications 1 à 6, caractérisé en ce que la came (9) présente deux faces d'arrêt parallèles (12, 13) s'étendant axialement sur la longueur de l'anneau (8).

8. Coupleur de prises selon l'une ou plusieurs des revendications 1 à 7, caractérisé en ce que le prolongement en forme de nervure (17) du capuchon (14) présente une section en forme de quart de circonférence et une longueur adaptée à celle de l'anneau (8).

9. Coupleur de prises selon l'une ou plusieurs des revendications 1 à 8, caractérisé en ce que le capuchon (14) est moleté à l'extérieur.

## FIG.1

## FIG.2